# EUROPEAN PATENT APPLICATION

(11) **EP 2 246 953 A1**
(43) Date of publication of application: **03.11.2010**
(21) Application number: 09165160.4
(22) Date of filing: 10.07.2009
(51) Int. Cl.: H02G 11/02

(54) **Rotation-type single-pull retraction mechanism**

(30) Priority: 27.04.2009 US 430887; 27.04.2009 JP 2009002714 U
(71) Applicant: Sunitec Enterprise Co. Ltd., Jhanghe City 235 (TW)
(72) Inventor: Chien, Chin-Wei, 235 Jhonghe City (TW)
(74) Representative: Viering, Jentschura & Partner

(57) **Abstract**

A rotation-type single-pull refract mechanism includes a housing (10) with a lower housing (12,12') and an upper cover (11,11'), a rotation mold (20,20'), a plate-shaped spring (30), and a wire material. The lower housing (12,12') has a positioning shaft (121,121') and at least one blocking element (50,50') movably mounted on the lower housing (12,12'). Two wire-outlet holes (101,102) are formed on the sides of the housing. The rotation mold (20,20') has a wire winding shaft (23) and a ratchet-wheel-shaped boss (22,21') with at least two positioning teeth (221,211') that correspond to the blocking element. The rotation mold (20,20') has a wire- through hole (202), a wire winding annular wall (21) with the plate-shaped spring (30) placed within, and a first through-hole (201) engaged with the positioning shaft (121,121'). Therein, an inner root portion (31) of the plate-shaped spring is fixedly connected with the positioning shaft (121,121'). Thereby, the wire material may be reeled on the wire winding annular wall (21), so that two ends of the wire material pass through the two wire-outlet holes (101,102).

## Description

### BACKGROUND OF THE INVENTION

### 1. Field of the Invention

The present invention relates to a retraction mechanism for wire materials such as power cables, signal lines, and data lines; and more particularly to a rotation-type single-pull retraction mechanism.

### 2. Description of Related Art

With rapid development of electronic products, more and more peripheral equipments for all kinds of electronic products are available, such as power adapters, earphones, data lines, and USB interface converter cables etc. The peripheral equipments all have wire materials with a certain length for electric conduction or transmission of data signals. If the wire materials are of fixed length, then they cannot be adapted for all kinds of application that covers different distances. Further, since the wire materials are abundant in variety, they are inconvenient for storage and carrying when the wire materials are neatly arranged, and also, the wire materials are easily damaged since they are usually bent rigidly when being arranged. Accordingly, various wire materials have appeared to overcome the aforementioned problems. However, conventional retraction mechanisms, double-directional retraction mechanisms, or single-directional retraction mechanisms, have complicated structures, which results in difficulty to meet with various demands of length adjustment for the wire materials; and so the retraction mechanisms are difficult to operate and control. Additionally, movable pull wires and fixed wires in the mechanisms are electrically connected via PCBs or elastic contacting pieces, so poor contact occurs easily from wear and tear of the wires during usage, thereby the wires lose efficacy and have short service lives.

### SUMMARY OF THE INVENTION

An object of the present invention is to provide a rotation-type single-pull retraction mechanism which has a simple structure and a long service life and is convenient for operation and control.

To achieving the above-mentioned object, a rotation-type single-pull retraction mechanism in accordance with a preferred embodiment of the present invention is provided.

The rotation-type single-pull retraction mechanism includes a housing and a rotation mold, wherein a plate-shaped spring is mounted in the housing. The housing includes a lower housing and an upper cover engaging with each other. The lower housing has a positioning shaft formed thereon. The rotation mold has a first through-hole which is formed therein and engages with the positioning shaft and a wire-through hole formed in the rotation mold. Two wire-outlet holes are formed in sides of the housing. A wire winding annular wall is formed on an upper end of the rotation mold. The plate-shaped spring is placed in the wire winding annular wall. An inner root portion of the plate-shaped spring is fixedly connected with the positioning shaft. The rotation mold has a ratchet-wheel-shaped boss and a wire winding shaft formed on a lower end thereof. At least two positioning teeth are disposed on a circumference of the ratchet-wheel-shaped boss. At least one blocking element which can be movably adjusted is mounted on the lower housing and engages with the positioning teeth. The wire material includes a movable segment, a transitional connecting segment, and a fixed segment. The movable segment is reeled on the wire winding annular wall on the upper end of the rotation mold, an outer end of the movable segment extending out of the housing through one of the two wire-outlet holes and an inner end of the movable segment passing through the wire-through hole and connected with the transitional connecting segment. The other end of the transitional connecting segment is connected with an inner end of the fixed segment, and the outer end of the fixed segment extends out of the housing through the other wire-outlet hole.

Compared with conventional retraction mechanisms, the rotation-type single-pull retraction mechanism of the present invention has the advantages as follows: 1. the present invention has a simple and compact structure and is convenient for operation and control in one direction; 2. there are at least two positioning teeth disposed on the circumference of the ratchet-wheel-shaped boss, that is, there are at least two locations for length adjustment so that users can adjust the length of the wire material according to the demands, which is convenient for use; 3. the wire material has three segments, and after the movable segment is reeled, a segment of the wire material is reserved to be the transitional connecting segment which is connected with the fixed segment, so that the three segments of the wire material functions as one complete wire during the pulling and retracting of the wire material, thereby preventing wear-and-tear and bad contact, and thereby prolonging the service life.

### BRIEF DESCRIPTION OF THE DRAWINGS

Fig. 1 is a perspective view of a rotation-type single-pull retraction mechanism according to the present invention;

Fig. 2 is a laterally cross-sectional view of the rotation-type single-pull retraction mechanism according to the present invention;

Fig. 3 is a longitudinally cross-sectional view of the rotation-type single-pull retraction mechanism according to the present invention;

Fig. 4 is an exploded perspective view of the rotation-type single-pull retraction mechanism according to the present invention;

Fig. 5 is a laterally cross-sectional view of the rotation-type single-pull retraction mechanism according to the present invention;

Fig. 6 is a longitudinally cross-sectional view of the rotation-type single-pull retraction mechanism according to the present invention; and

Fig. 7 is an exploded perspective view of the rotation-type single-pull retraction mechanism according to the present invention.

### DETAILED DESCRIPTION OF THE PREFERRED EMBODIMENTS

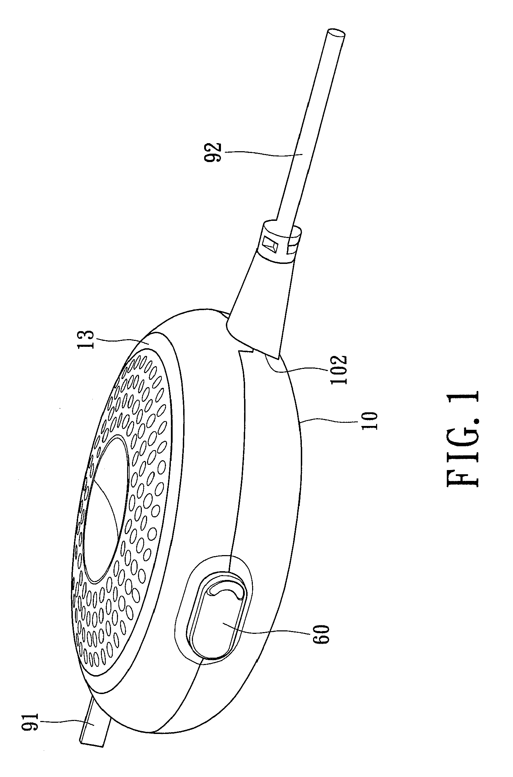

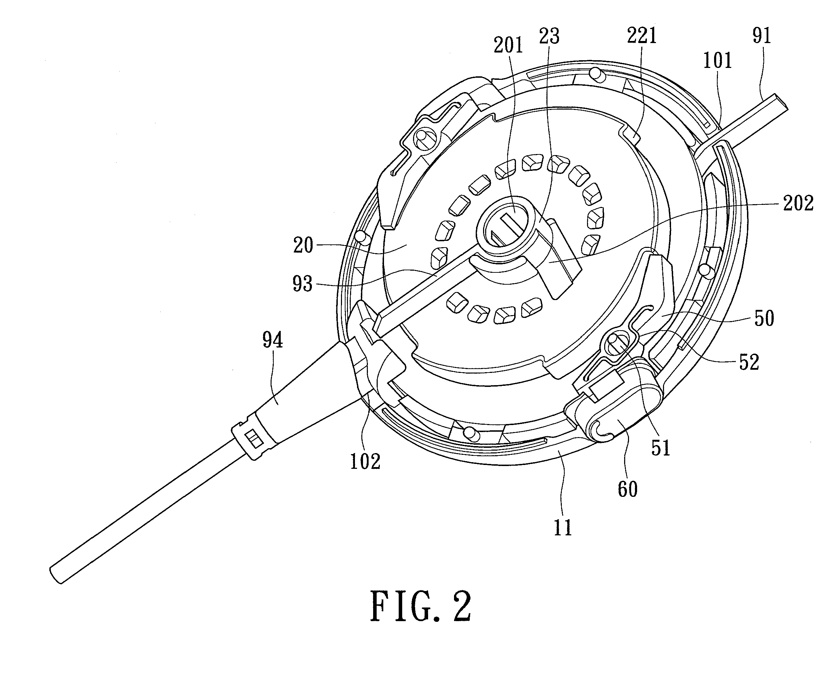

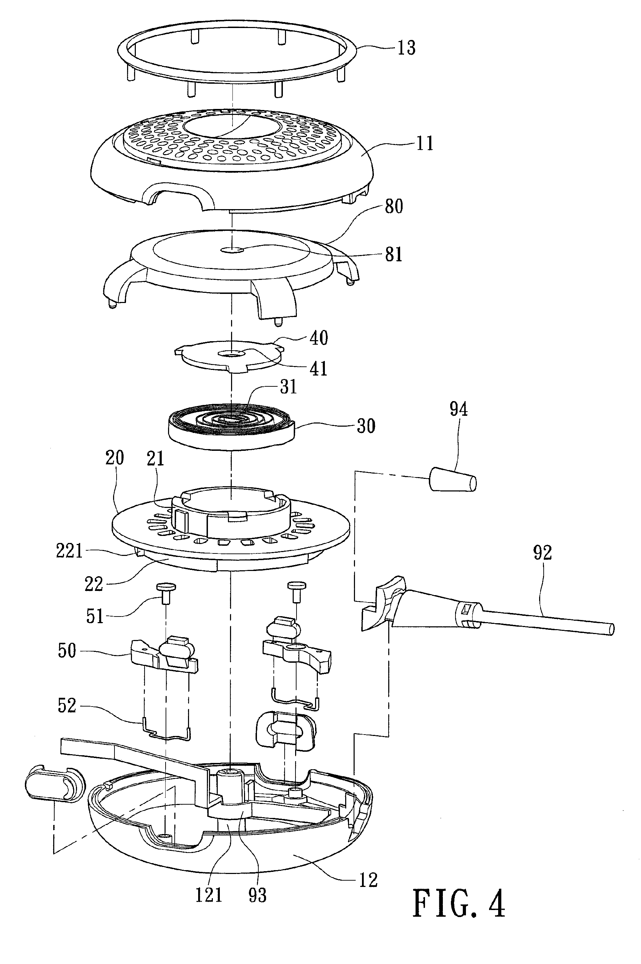

A first embodiment of the present invention provides a rotation-type single-pull retraction mechanism, as shown in Figs. 1-4. The rotation-type single-pull retraction mechanism includes a circular-plate-shaped housing 10 and a rotation mold 20 and a plate-shaped spring 30 which are disposed in the housing 10. The housing 10 includes an upper cover 11 and a lower housing 12 engaging with each other. A positioning shaft 121 is formed on the lower housing 12, and a first through-hole 201 is formed in the rotation mold 20, engaging with the positioning shaft 121. The rotation mold 20 has a wire-through hole 202 formed therein. Two wire-outlet holes 101, 102 are formed in sides of the housing 10. The rotation mold 20 has a wire winding annular wall 21 formed on an upper end thereof and the plate-shaped spring 30 is placed in the annular wall 21. An inner root portion 31 of the plate-shaped spring 30 is fixedly connected with the positioning shaft 121, and a spring cover 40 covers an upper end of the plate-shaped spring 30, so the plate-shaped spring 30 always stays in the wire winding annular wall 21. The rotation mold 20 has a ratchet-wheel-shaped boss 22 and a wire winding shaft 23 formed on a lower end thereof. Six positioning teeth 221 are formed on the circumference of the ratchet-wheel-shaped boss 22 uniformly. Two blocking elements 50, which can be movably adjusted, are symmetrically mounted on two sides of the circumference of the lower housing 12 to engage with the positioning teeth 221. In the present invention, the blocking elements 50 are mounted as follows: as shown in Fig. 2 and Fig. 4, the blocking elements 50 are mounted on the lower housing 12 via pin shafts 51 and torque springs 52, and press buttons 60 are disposed on outer sides of the blocking elements 50. When the press buttons are not pressed, the end points of the blocking elements 50 abut against the positioning teeth 221, so that the rotation mold 20 can only rotate in one direction (refer to the direction as shown in Fig. 2, that is, the rotation mold 20 can only rotate in the anticlockwise direction, and the clock wise rotation of the rotation mold 20 is prevented. The directions described in the following description all refer to the direction as shown in Fig. 2.).

In the present invention, the wire material has three segments: one, a movable segment 91 which is used for being pulled or retracted to meet the demands of various lengths and be easy to be connected and carried; two, a fixed segment 92 which cannot be pulled and is used for being connected with a signal source or a power source; three, a transitional connecting segment 93 which connects the movable segment 91 with the fixed segment 92 and provides elbowroom during pulling or retracting the movable segment 91 to prevent the wire material from twisting during pulling or retracting the movable segment 91. The movable segment 91 is reeled on the wire winding annular wall 21 on the upper end of the rotation mold 20. An outer end of the movable segment 91 extends out of the housing 10 through the wire-outlet hole 101, and an inner end thereof passes through the wire-through hole 202 and is connected with the transitional connecting segment 93 reeled on the wire winding shaft 23 on the lower end of the rotation mold 20. The other end of the transitional connecting segment 93 is connected with the inner end of the fixed segment 92. The outer end of the fixed segment 92 extends out of the housing 10 through the other wire-outlet hole 102. For further ensuring that the wire material 90 is pulled or retracted successfully, the present invention also has a wire blocking board 80 which has a third through-hole 81 formed therein, engaging with the positioning shaft 121. The movable segment 91 and the transitional connecting segment 93 may be a complete wire material. The transitional connecting segment 93 corresponds to a segment of wire material which is reserved after the movable segment 91 is designed. The movable segment 91 is reeled on the wire winding annular wall 21 and then passes through the wire-through hole 202, and the reserved wire material (that is, the transitional connecting segment 93) is reeled on the wire winding shaft 23 and then connected with the fixed segment 92. As shown in Fig. 2 and Fig. 4, the transitional connecting segment 93 and the fixed segment 92 can be connected via a corresponding plastic conversion element 94 according to the variety of the wire material. Of course, in special conditions, the three segments of wire materials may also be a complete wire material.

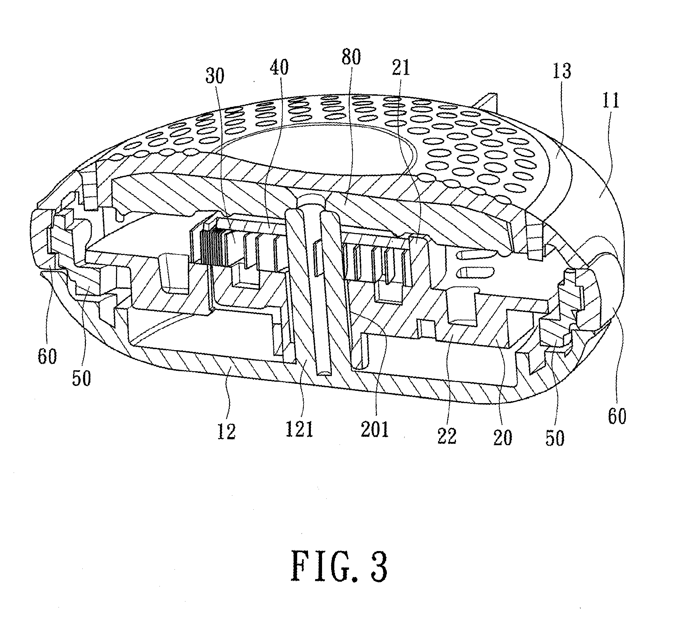

As shown in Fig. 3 and Fig. 4, after assembly, the positioning shaft 121 of the lower housing 12 passes through the first through-hole 201, the plate-shaped spring 30, the second through-hole 41 of the spring cover 40 and the third through-hole 81 of the wire blocking board 80 from the lower to the upper in turn.

As shown in Fig. 1 and Fig. 4, in the present invention, the upper cover 11 has an annular decorative strip 13 for improving the appearance of the product.

The wire material reeled on the wire winding annular wall, (that is, the movable segment 91), may be pulled or retracted, which has the length designed according to actual demands. The length of the transitional connecting segment 93 is smaller than that of the movable segment 91. Combining with Fig. 2, during use, users can pull the movable segment 91 according to the length demand to drive the rotation mold 20 to rotate in the anticlockwise direction, and the plate-shaped spring 30 is compressed. After the wire material is pulled for a proper length, the pulling action stops. At this time, the positioning teeth 221 of the rotation mold 20 is abutted against by the end points of the blocking elements 50 (since there are the torque springs 52, the end points of the blocking elements 50 always abut against the circumference of the ratchet-wheel-shaped boss 22 without an external force.), and the elastic force of the plate-shaped spring 30 is overcome, so the rotation mold 20 cannot rotate reversely in the clockwise direction and the wire material cannot be retracted. After use, users press the press button 60, and then the blocking elements 50 rotate around the pin shaft 51 so that the end points of the blocking elements 50 are detached from the positioning teeth 221. Under the elastic force of the plate-shaped spring 30, the rotation mold 20 rotates in the clockwise direction and drives the wire material (the movable segment 91) to be retracted into the mechanism. During the pulling and retracting of the movable segment 91, the transitional connecting segment 93 may release and retract reciprocatingly with the rotation of the rotation mold 20, thereby providing elbowroom and avoiding the twisting of the wire material from during pulling or retracting effectively.

In the present invention, there are six positioning teeth 221 disposed on the circumference of the ratchet-wheel-shaped boss 22 uniformly, that is, there is one stop location for each one sixth of the circumference of the ratchet-wheel-shaped boss 22 for pulling or retracting the proper length of the wire material, which can meet various demands totally. Of course, the number of the positioning teeth 221 may be eight or others; or alternatively, the ratchet-wheel-shaped boss 22 with a different circumference length is designed. The blocking elements 50 are two symmetrical blocking elements 50 to ensure that the pulling or retracting operation is more reliable.

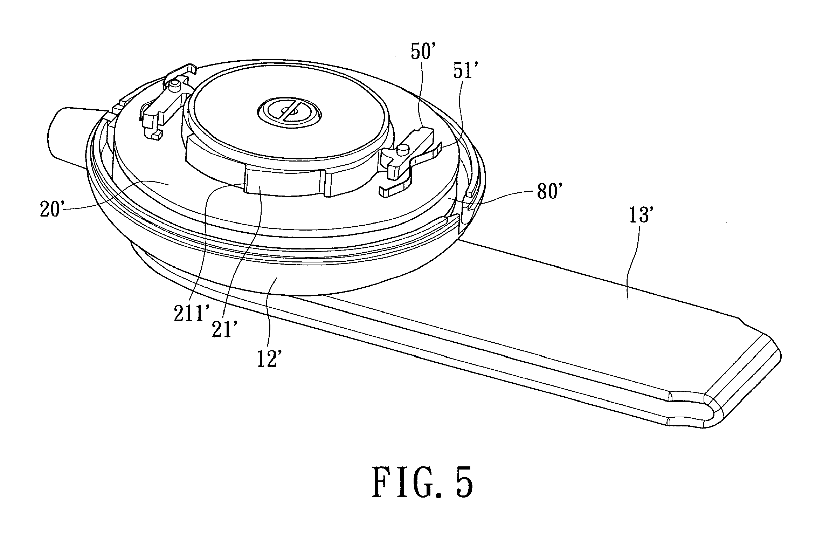

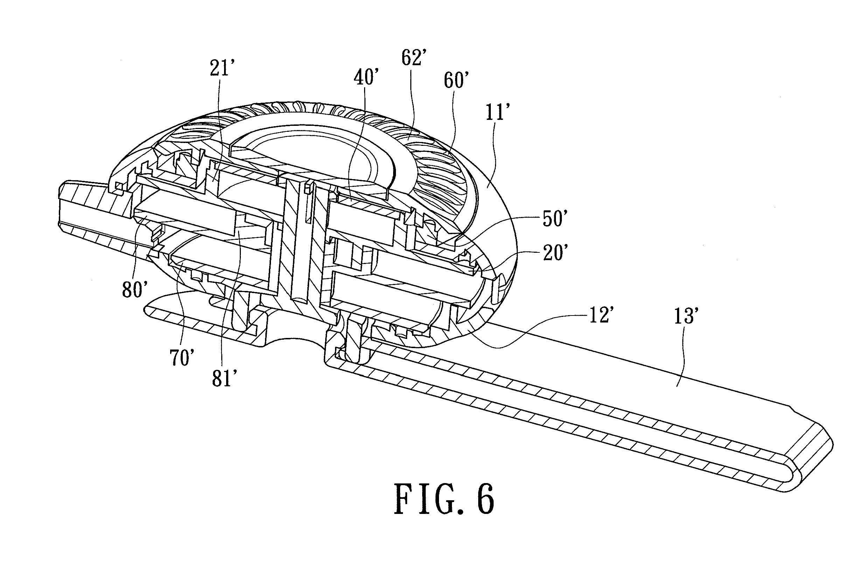

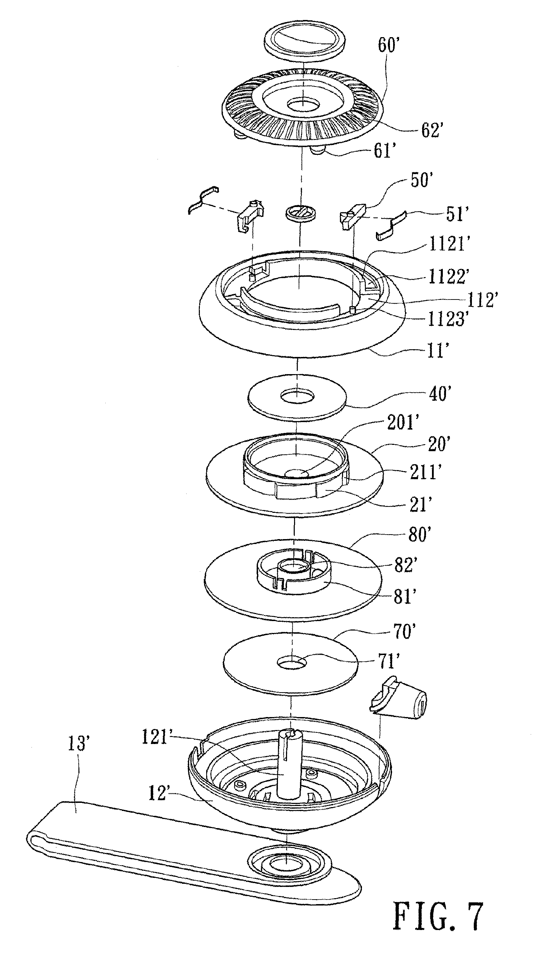

Another embodiment of the present invention provides a rotation-type single-pull retraction mechanism, as shown in Figs.5-7 (the plate-shaped spring and the wire material are omitted). The difference between the embodiment and the aforementioned embodiment is mainly the positions of the blocking elements 50', the structure of the upper cover 11', the direction in which the ratchet-wheel-shaped boss 21' of the rotation mold 20' protrudes, and increased first wire carrying plate 80', second wire carrying plate 70' and U-shaped clamp 13'.

An annular platform 112' is horizontally disposed in the upper cover 11' and partially protrudes upwards to form two walls 1121' which form two slideways 1122' with the inner side of the upper cover 11'. One end of each slideway 1122' respectively corresponds to each blocking element 50'. Partial annular platform 112' which doesn't protrude upwards to form the two walls 1121' has two pin shafts 1123'. The lower housing 12, engaging with the upper cover 11', has a positioning shaft 121'. The rotation mold 20' has a fourth through-hole 201' engaging with the positioning shaft 121'. The rotation mold 20' has a spring cover 40' disposed thereon.

The two blocking elements 50' are mounted on the annular platform 112' via the two pin shafts 1123' and two torque springs 51'. The ratchet-wheel-shaped boss 21' of the rotation mold 20' extends upwards into the inner side of the upper cover 11'. At least two positioning teeth 211' are disposed on the circumference of the ratchet-wheel-shaped boss 21' to engage with the blocking elements 50'.

A dialing plate 60' is axially disposed on the upper cover 11'. The dialing plate 60' has raised lines 62 on an upper surface thereof to increase the contacting friction produced when a user' fingers dial the dialing plate 60' and two pushing elements 61' protruding downwards from the dialing plate 60'. When the two pushing elements 61' don't slide to the ends of the slideways 1122' respectively corresponding to the blocking elements 50', the end points of the blocking elements 50' abut against the positioning teeth 211'; and when the two pushing elements 61' slide to the ends of the slideways 1122' respectively corresponding to the blocking elements 50', the pushing elements 61' push the blocking elements 50' so that the blocking elements 50' overcome the force produced by the torque spring 51' abutting against the positioning teeth 211', thereby the blocking elements 50' are detached from the positioning teeth 211'.

The first wire carrying plate 80' has a wire winding annular wall 81' disposed on an upper end thereof and connected beneath the rotation mold 20'. The space between the first wire carrying plate 80' and the rotation mold 20' may receive the movable segment of the wire material (not shown) which may be reeled on the wire winding annular wall 81'. When the blocking elements 50' are detached from the positioning teeth 211', the rotation mold 20' and the first wire carrying plate 80' rotate together thereby achieving the retraction effect. The first wire carrying plate 80' has a fifth through-hole 82' engaging with the positioning shaft 121'.

The second wire carrying plate 70' is disposed beneath the first wire carrying plate 80'. The space between the first and the second carrying plates 70', 80' may receive the fixed segment of wire material (not shown). The second wire carrying plate 70' has a sixth through-hole 71' engaging with the positioning shaft 121'.

The U-shaped clamp 13' is combined with the lower end of the lower housing 12' for clamping a belt, thereby being convenient for carry.

## Claims

1. A rotation-type single-pull retraction mechanism, comprising:
a housing, including a lower housing and an upper cover engaged with each other, the lower housing having a positioning shaft formed thereon, at least one blocking element that can be movably adjusted mounted on the lower housing; and two wire-outlet holes are formed in sides of the housing ;
a rotation mold, having a ratchet-wheel-shaped boss and a wire winding shaft disposed on a lower end thereof; at least two positioning teeth disposed on a circumference of the ratchet-wheel-shaped boss, corresponding to the blocking element; the rotation mold having a first through-hole engaging with the positioning shaft, a wire-through hole and a wire winding annular wall formed on an upper end of the rotation mold;
a plate-shaped spring, placed in the wire winding annular wall, an inner root portion of the plate-shaped spring fixedly connected with the positioning shaft; and
a wire material, reeled on the wire winding annular wall, two ends of the wire material passing through the two wire-outlet holes.

2. The rotation-type single-pull retraction mechanism as claimed in claim 1, wherein the number of the blocking elements are two, and the two blocking elements are respectively mounted on two sides of a circumference of the lower housing.

3. The rotation-type single-pull retraction mechanism as claimed in claim 1, wherein the blocking element is mounted on the lower housing via a pin shaft and a torque spring.

4. The rotation-type single-pull retraction mechanism as claimed in claim 2, wherein two press buttons are disposed on outer sides of the blocking elements.

5. The rotation-type single-pull retraction mechanism as claimed in claim 1, wherein six positioning teeth are disposed on the circumference of the ratchet-wheel-shaped boss.

6. The rotation-type single-pull retraction mechanism as claimed in claim 1, wherein a spring cover is disposed on the plate-shaped spring and has a second through-hole formed therein which engages with the positioning shaft.

7. The rotation-type single-pull retraction mechanism as claimed in claim 1, wherein a wire blocking board is disposed on the rotation mold and has a third through-hole formed therein which engages with the positioning shaft.

8. The rotation-type single-pull retraction mechanism as claimed in claim 1, wherein the upper cover has an annular decorative strip formed thereon.

9. The rotation-type single-pull retraction mechanism as claimed in claim 1, wherein the wire material has a movable segment, a transitional connecting segment, and a fixed segment, and the movable segment is reeled on the wire winding annular wall, an outer end of the movable segment extending out of the housing through one of the two wire-outlet holes and an inner end of the movable segment passing through the wire-through hole and is connected with the transitional connecting segment, the transitional connecting segment is reeled on the wire winding shaft and the other end of the transitional connecting segment is connected with an inner end of the fixed segment, and the outer end of the fixed segment extends out of the housing through the other wire-outlet hole.

10. A rotation-type single-pull retraction mechanism, comprising:
a housing, including a lower housing and an upper cover engaging with each other, the lower housing having a positioning shaft formed thereon, at least one blocking element which can be movably adjusted mounted on an inner side of the upper cover and a dialing plate disposed on an outer side of the upper cover, a pushing element disposed beneath the dialing plate, and two wire-outlet holes formed in sides of the housing;
a rotation mold, having a ratchet-wheel-shaped boss formed on an upper end thereof and extending upwards into an inner side of the upper cover; at least two positioning teeth disposed on a circumference of the ratchet-wheel-shaped boss, corresponding to the blocking element; and the rotation mold having a fourth through-hole engaging with the positioning shaft;
a first wire carrying plate, disposed beneath the rotation mold and having a wire winding annular wall formed on an upper end of the first wire carrying plate and a fifth through-hole engaging with the positioning shaft;
a plate-shaped spring, placed in the wire winding annular wall; and
a wire material, reeled on the wire winding annular wall, two ends of the wire material passing through the two wire-outlet holes.

11. The rotation-type single-pull retraction mechanism as claimed in claim 10, wherein an annular platform is horizontally disposed in the upper cover and the ratchet-wheel-shaped boss extends through an inner side of the annular platform, and the blocking element is mounted on the annular platform via a pin shaft and a torque spring.

12. The rotation-type single-pull retraction mechanism as claimed in claim 11, wherein the annular platform partially protrudes upwards to form at least two walls which form two slideways with the inner side of the upper cover, and the pushing element is slidably disposed on the slideways which each has an end corresponding to the blocking element.

13. The rotation-type single-pull retraction mechanism as claimed in claim 10, wherein a second wire carrying plate is disposed beneath the first wire carrying plate and has a sixth through-hole engaging with the positioning shaft.

14. The rotation-type single-pull retraction mechanism as claimed in claim 10, wherein the dialing plate has raised lines formed on an upper surface thereof

15. The rotation-type single-pull retraction mechanism as claimed in claim 10, wherein a lower end of the lower housing is combined with a U-shaped clamp.
